# EUROPÄISCHE PATENTSCHRIFT

(11) **EP 0 614 524 B1**
(45) Veröffentlichungstag und Bekanntmachung des Hinweises auf die Patenterteilung: **02.08.1995**
(21) Anmeldenummer: 92924619.7
(22) Anmeldetag: 28.11.1992
(51) Int. Cl.: G01M 9/04

(54) **WINDKANAL MIT FREISTRAHLMESSSTRECKE ZUR SIMULATION VON WINDRICHTUNGSSCHWANKUNGEN**
WIND TUNNEL WITH OPEN JET MEASUREMENT SECTION FOR SIMULATING WIND DIRECTION CHANGES
SOUFFLERIE AVEC VEINE D'ESSAI A JET LIBRE POUR LA SIMULATION DE VARIATIONS DE LA DIRECTION DE VENT

(30) Priorität: 29.11.1991 DE 4139359
(43) Veröffentlichungstag der Anmeldung: 14.09.1994
(73) Patentinhaber: MERCEDES-BENZ AG, 70327 Stuttgart (DE); Kramer, Carl, Prof.Dr.-Ing., 52076 Aachen (DE)
(72) Erfinder: KRAMER, Carl, D-5100 Aachen (DE); KONRATH, Bernd, D-5100 Aachen (DE)
(86) Internationale Anmeldenummer: EP9202757
(87) Internationale Veröffentlichungsnummer: WO9311417

(56) Entgegenhaltungen:
- DE-A- 4 007 230
- DE-C- 3 715 016
- US-A- 5 025 659

## Beschreibung

Die Erfindung betrifft einen Windkanal mit Freistrahlmeßstrecke, in welcher die Strömungsrichtung während des Betriebes des Windkanals geschwenkt werden kann. Nach den Lehren der Erfindung ist dies bei blasendem Wind möglich, ohne wesentliche Einbußen der aerodynamischen Qualität der Strömung im Hinblick auf Gleichmäßigkeit der Geschwindigkeitsverteilung und Höhe des Turbulenzgrades in Kaufnehmen zu müssen.

Ein Windkanal, bei dem die Strömungsrichtung während des Betriebes des Windkanals geschwenkt werden kann, ist bereits aus DE 3715016 bekannt. Dieser Windkanal ist vornehmlich für aero-akustische Untersuchungen von Kraftfahrzeugen gedacht und zeichnet sich dadurch aus, daß das Gebläse zur Strömungsgeräuschsimulation des in einem Akustikraum stehenden Kraftfahrzeuges ausgelegt ist. Was allerdings im einzelnen unter aus der Auslegung für die Umströmungsgeräuschsimulation zu verstehen ist, geht aus den Lehren der Erfindung nicht hervor. In der Erfindung wird weiterhin eine Vorrichtung beschrieben, bei welcher der Austrittsquerschnitt der Freistrahldüse deutlich geringer ist als die Querschnittsfläche des angeströmten Kraftfahrzeuges. Daraus geht hervor, daß an die Qualität der aerodynamischen Umströmungssimulation keine allzu hohen Ansprüche gestellt werden. Zu Böensimulation kann die Düse nach den Lehren der Erfindung DE 30715016 um ihre Hochachse pendelartig geschwenkt werden. Die Verbindung zwischen Düse und Düsenvorkammer erfolgt dabei mittels eines flexiblen Schlauchkanals. Da sich beim Schwenken der Düse die Krümmung dieses Schlauchkanals und folglich auch das Geschwindigkeitsprofil der sich einstellenden Krümmerströmung ständig ändert, ist die mit dieser Einrichtung erzielbare Gleichmäßigkeit der Geschwindigkeitsverteilung im Düsenaustrittsquerschnitt eher mäßig.

Ein weiter Windkanal, in dem die Richtung der Luftströmung beim Austritt aus einer starren Freistrahldüse geändert werden kann, ist aus DE 40 07 230 bekannt. Hier werden zur Strömungsrichtungsänderung als Schaufelgitter angeordnete, jeweils um ihre Hochachse schwenkbare Tragflügelprofile verwendet. Damit eine Richtungsänderung des Freistrahles möglich ist, wird dieses Gitter mit den schwenkbar angeordneten Profilen hinter den Austritt der Windkanaldüse montiert. Das in der Windkanalmeßstrecke zu untersuchende Objekt, nach den Lehren der erwähnten Erfindung vorzugsweise ein Kraftfahrzeug oder ein Kraftfahrzeugmodell, ist also der durch das Gitter beeinflußten Strahlströmung ausgesetzt. Diese Strahlströmung ist durch die auch bei sorgfältigster Ausbildung der Profile nicht vermeidbaren Nachläufe hinter den Profilen gekennzeichnet. Für aeroakustische Untersuchungen z.B. dürfte der Windkanal sich kaum eignen, da dem Freistrahlgeräusch noch zusätzlich das Geräusch des mit hoher Geschwindigkeit, nämlich der Ausströmgeschwindigkeit aus der Düse, umströmten Profilgitters überlagert ist. Auch im Hinblick auf die Strahlturbulenz erfüllt eine solche Windkanaleinrichtung nicht die für die Durchführung präziser aerodynamischer Untersuchungen zu erfüllenden Anforderungen, da die Strahlturbulenz stark von den Strömungsnachläufen hinter den einzelnen Profilen beeinflußt wird und sich diese Turbulenz zudem noch aufgrund der Vermischung dieser Nachläufe mit der zwischen den Profilen hindurchtretenden Strömung noch stark mit der Lauflänge der Strömung ändert. Dies würde z. B. bedeuten, daß die Turbulenz am Vorderteil eines zu untersuchenden Kraftfahrzeuges von anderer Struktur ist als am Heck.

Eine ähnliche Vorrichtung zur Böenerzeugung in einem Windkanal wird von W. Baumert et al. von der Deutschen Forschungs- und Versuchsanstalt für Luft- und Raumfahrt in der Mitteilung DFVLR-Mitt. 89/05 in Absatz 7.4 beschrieben. Hierbei geht es aber um relativ kleine Winkeländerungen, die mit relativ hoher Frequenz erfolgen, z.B. Böenamplitude +/- 2° bei einer Frequenz von 20 Hz. Es handelt sich also um eine Einrichtung, die im wesentlichen für flugmechanische und insbesondere aeroelastische Untersuchungen geeignet ist und für Messungen an Kraftfahrzeugen, wo wesentlich größere Winkelabweichungen bis 20 ° erforderlich sind, ungeeignet ist. Ein Nachteil dieser Einrichtung ist noch, wie aus Bild 7.4-3 der genannten Veröffentlichung hervorgeht, daß der Böenwinkel sich über die Lauflänge der Strömung sehr stark ändert, während z. B. in einem Abstand von 900 mm sich ein noch annähernd konstanter Winkel von etwa 0,7° über die gesamte Höhe der Windkanaldüse einstellt, ist bereits nach weiteren 900 mm Lauflänge der Böenwinkel bei einer Böenfrequenz von 5 Hz am oberen Strahlrand doppelt so groß wie am unteren. Auch diese Einrichtung eignet sich daher allenfalls für orientierende Studien und erfüllt nicht die hohen Anforderungen für Entwicklungsarbeiten im Bereich der Kraftfahrzeug-Aerodynamik und insbesondere der Strömungsakustik von Kraftfahrzeugen.

Ein weiterer Windkanal, bei dem mit einem relativ kleinen Düsenaustrittsquerschnitt eine akzeptable Simulation der Umströmung erzielt werden kann, ist aus dem U.S.-Patent 5,025,659 bekannt. Die verbesserte Strömungssimulation bei vergleichsweise kleinem Düsenaustrittsquerschnitt wird durch Verlängern der Düse mittels geschlitzter Wände erzielt. Diese geschlitzten Wände gestatten einen Druckausgleich und verhindern die beim reinen Freistrahl unvermeidliche Entwicklung einer Mischzone, deren Querabmessung in Strömungsrichtung, also entlang des Prüflings, zunimmt. Allerdings funktioniert dieses Verfahren nur bei symmetrischer oder annähernd symmetrischer Anströmung des Prüflings. Da außerdem Düse und Seitenwände starr sind, ist der Windkanal nach dem U.S.-Patent zur Böensimulation ungeeignet.

Informationen über einen aero-akustischen Windkanal sind z. B. aus dem AGARD-Bericht Nr. 601 "Problems in Wind Tunnel Testing Techniques" aus dem Jahr 1973 und insbesondere aus der in diesem Bericht enthaltenen Arbeit von T.A. Holbeche und J. Williams "Acoustic Considerations For Noise Experiments At Model Scale In Subsonic Wind Tunnels" bekannt. Die Meßstrecke ist von einem sogenannten anechioschen Raum mit hoher Schallabsorption umgeben. In die Strömungsführung sind sowohl auf der Zuströmseite als auch auf der Abströmseite zum Ventilator, der die Luftströmung durch die Meßkammer im Kreislauf fördert, Schalldämpfer eingebaut, die im Fall eines Windkanals mit geschlossener Strömungsführung zweckmäßigerweise mit den Umlenkecken kombiniert sind. Die Einfügungsdämpfung dieser Schalldämpfer ist dabei so zu bemessen, daß der vom Ventilator herrührende Schalldruckpegel in der Meßkammer ausreichend, z. B. um 10 dB, unterhalb des Schalldruckpegels liegt, der vom Meßstrahl erzeugt wird. Dann ist das Ventilatorgeräusch in der Meßkammer nicht mehr wahrnehmbar und wirkt sich auch nicht mehr auf genaue akustische Messungen störend aus.

Der aus dieser Veröffentlichung bekannte Windkanalentwurf läßt sich jedoch nicht zur Böensimulation verwenden, da keine Maßnahmen zur momentanen Veränderung der Strömungsrichtung vorhanden ist.

Der Erfindung liegt daher die Aufgabe zugrunde, die bekannten Windkanalentwürfe weiter zu entwickeln und einen Windkanal zu schaffen, der neben in einer auch für Entwicklungsaufgaben ausreichend guten Simulation der Vollumströmung eine Möglichkeit zur Böensimulation durch Schwenken der Windrichtung gestattet und zusätzlich, bei entsprechender Ausstattung des Windkanals, auch aero-akustische Untersuchungen zuläßt.

Ein solcher Windkanal ist überall da von Vorteil, wo rasche Änderungen der Strömungsrichtung, wie sie z. B. im natürlichen Wind auftreten, simuliert werden sollen, oder wenn es darum geht, die aerodyamischen Eigenschaften und die Reaktion eines umströmten Körpers in einem Strömungsfeld mit sich rasch ändernder Strömungsrichtung zu studieren. Von besonderer Bedeutung ist dies im Bereich der Fahrzeugaerodynamik zur Untersuchung von Seitenwindeffekten. Zur Zeit ist es nur möglich, Fahrzeuge auf ihre Seitenwindeignung dadurch zu untersuchen, daß das auf einer drehbaren Plattform montierte Fahrzeug mit seiner Längsachse gegen die Strömungsrichtung verdreht wird. Die unter diesen Bedingungen gemessenen aerodynamischen Daten, wie z. B. Luftkräfte und Luftkraftmomente, gelten aber nur für den Fall der stationären Strömung, der beim praktischen Fahrbetrieb wesentlich weniger bedeutend ist als der nichtstationäre Vorgang, welcher sich abspielt, wenn ein Fahrzeug in eine Seitenwindböe eintaucht. Diesen Effekt versucht man durch Seitenwindanlagen zu erfassen, an denen Fahrzeuge mit einer bestimmten Geschwindigkeit vorbeifahren. Solche Untersuchungen lassen sich aber bei einer Fahrzeugentwicklung nur in bereits sehr weit fortgeschrittenen Ent-wicklungsstadien machen, erfordern einen hohen Aufwand und sind zudem noch, da sie auf einer Teststrecke stattfinden müssen, stark witterungsabhängig und nur unter besonderen meteorologischen Bedingungen durchführbar. Außerdem lassen sich mit einer Seitenwindversuchsanlage nur Effekte erfassen, welche die Führung des Fahrzeuges betreffen und nicht etwa andere für die Fahrzeugentwicklung wesentliche Einflüsse, wie z. B. die Veränderung des Strömungsgeräuschs bei rascher Änderung der Anströmrichtung. Gerade bei komfortablen Fahrzeugen, die im Innenraum nur einen geringen Lärmpegel aufweisen, ist die Veränderung des Umströmungsgeräuschs bei wechselnder effektiver Windrichtung sehr störend. Diese Veränderungen lassen sich in üblichen aero-akustischen Windkanälen für die Fahrzeugaerodynamik, in welchen die Anblasrichtung lediglich durch Drehen des auf einer Drehplattform aufgestellten Fahrzeugs verändert werden kann, nicht erfaßt. Man ist daher zur Lösung dieses Problems auf aufwendige Fahrversuche angewiesen. Diese Fahrversuche können aber erst stattfinden, wenn bereits ein Prototyp vorliegt, also wesentliche Veränderungen in der Entwicklung kaum noch möglich sind. Ein solcher Windkanal mit hinreichenden akustischen Eigenschaften, also einem ausreichend niedrigen Lärmpegel, und zugleich im Betrieb veränderlicher Anströmrichtung kann auch bei der Qualitätskontrolle hochwertiger Automobile eingesetzt werden. Man kann nämlich im Rahmen der Endkontrolle die Innengeräusche bei entsprechender Windgeschwindigkeit und Schwenken der Düse kontrollieren, um Ursachen für störende Strömungsgeräusche, wie z. B. nicht vollständig verschlossene Öffnungen, fehlerhaft eingestellte Türen, usw. zu erkennen. Auf diese Weise ließen sich erhebliche Werkstatt-Service- und Garantieleistungen einsparen.

Daher besteht die Aufgabe, einen Windkanal zu schaffen, mit dem die Effekte der veränderlichen Schräganströmung ausreichend realitätsgetreu simuliert werden können.

Eine solche Einrichtung ist durch die vorliegende Erfindung eines Windkanals mit Freistrahlmeßstrecke und mit einer zur Erzeugung einer in ihrer Richtung veränderlichen Strömung bei laufendem Windkanal schwenkbaren Windkanaldösenanordnung gegeben. Diese Anordnung besteht aus einem um eine vertikale Achse drehbaren Düsenvorderteil, das von dem stromauf befindlichen Düsenhinterteil im Bereich des Wendepunktes der Düsenkontur zwischen der - von der Düsenmittellinie aus betrachtet - konkaven Krümmung des Düsenhinterteiles und der konvexen Krümmung des Düsenvorderteiles abgetrennt und an dieser Trennstelle von einer Einlaufrundung umgeben ist. Dieser Windkanal kann zusätzlich mit akustisch wirksamen Einrichtungen, die in die Strömungsführung integriert sind, ausgestattet werden, um den Schalldruckpegel soweit zu senken, daß auch die Wahrnehmung und meßtechnische Erfassung der von der Anströmrichtung abhängigen Strömungsgeräusche möglich ist. Die abhängigen Patentansprüche beschreiben vorteilhafte und zweckmäßige Ausführungsformen.

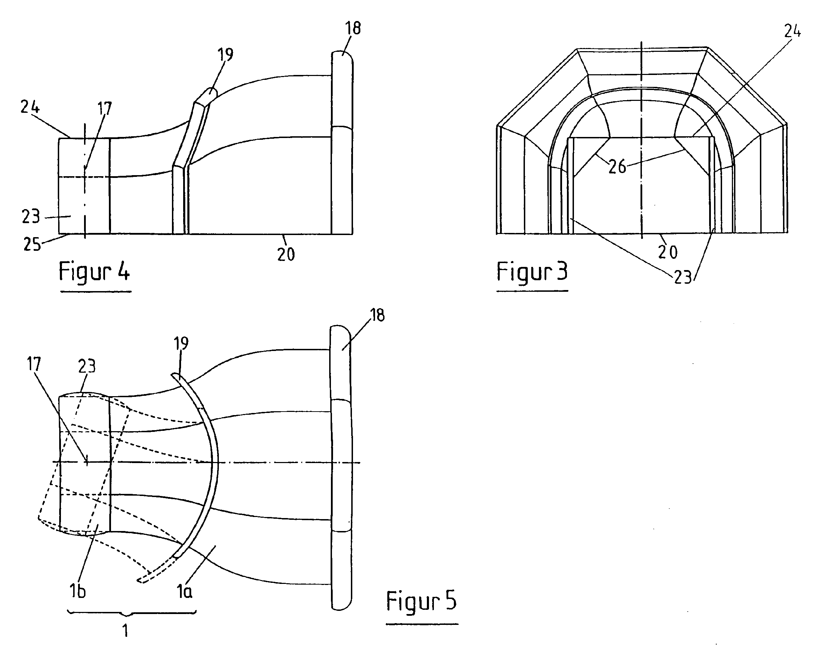

Ein typisches Ausführungsbeispiel wird anhand der Figuren erläutert. Es zeigen die Figuren 1 und 2 verschiedene Ansichten und Schnitte des Windkanals, die Figuren 3 - 5 eine in Frontansicht, Seitenansicht und Draufsicht und die Figuren 6 bis 11 Geschwindigkeitsprofile, gemessen im Strahl hinter dem Düsenaustrittsquerschnitt, aus denen die Gleichmäßigkeit und hohe Qualität der Strahlströmung bei unverschwenkter und bei verschwenkter Düse hervorgeht.

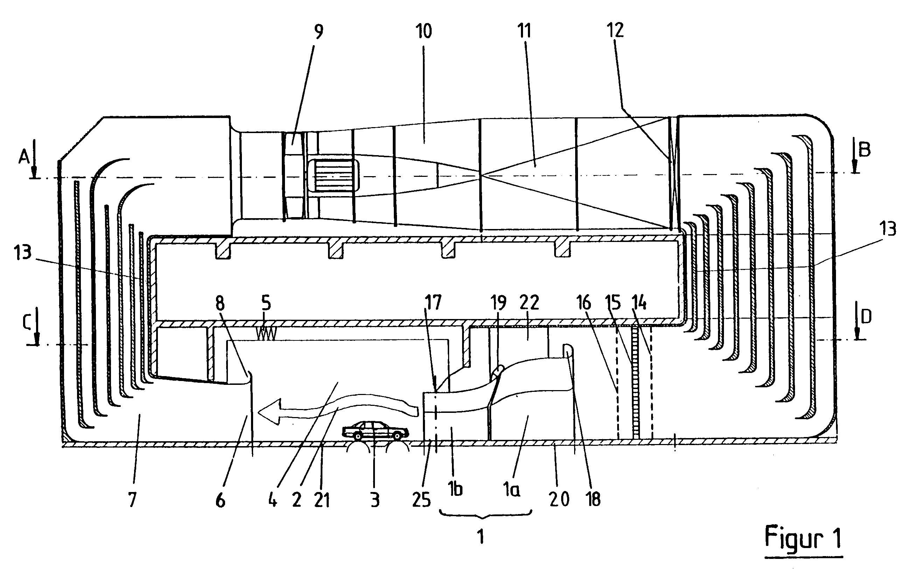

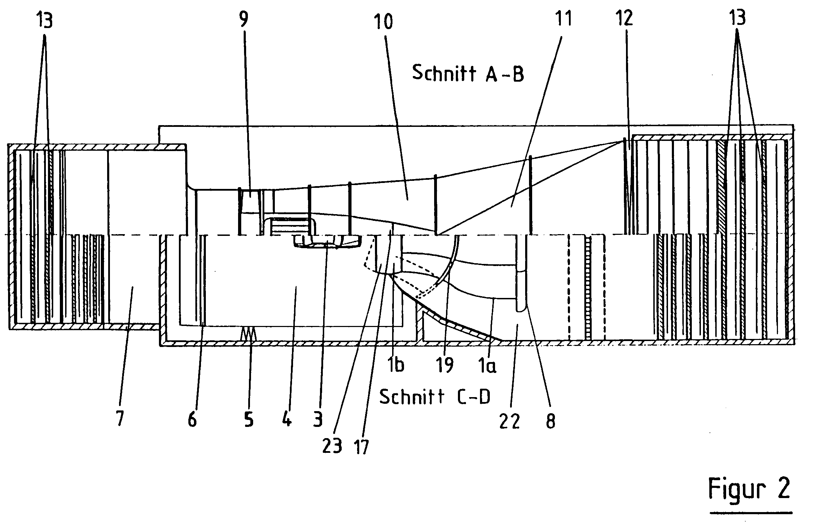

Zunächst wird anhand der Figuren 1 und 2 der Aufbau des Windkanals beschrieben. Der Windkanal ist als sogenannter Göttinger Windkanal mit geschlossener Strömungsrückführung ausgeführt. Aus der Düse (1) tritt der Windkanalstrahl, gekennzeichnet durch den Strömungspfeil (2), aus und umströmt das Prüfobjekt, im Fall der Figuren 1 und 2 ein Fahrzeug oder ein Fahrzeugmodell (3). Dieses Fahrzeug steht auf den in Figur 1 nur angedeuteten Rollen eines Leistungsprüfstandes, der in den Windkanal integriert sein kann, um auch Versuche im Fahrbetrieb durchführen zu können. Der Windkanalstrahl wird von dem Meßraum (4) umgeben. Die Innenwand des Meßraums kann zur Erzielung der für akustische Untersuchungen notwendigen geringen Reflektion von Schallwellen eine übliche akustische Auskleidung, z. B. in Form von Akustik-Keilen (5) erhalten. An der der Windkanaldüse gegenüberliegenden Seite des Meßraums tritt der Windkanalstrahl in den Auffänger (6) ein, an den sich ein Diffusor (7) anschließt. Der Auffänger hat eine gerundete oder entsprechend abgekantete Einlaufrundung (8) und kann in üblicher Weise justiert, bzw. verstellt werden, um zu erreichen, daß der statische Druck im Windkanalstrahl hinreichend genau dem statischen Druck in der Umgebung entspricht und sich insbesondere in Strömungsrichtung nicht in unzulässiger Weise verändert.

Stromab vom Diffusor (7) ist in dem Verbindungsschenkel zwischen Diffusor und dem im vorliegenden Fall oberhalb der Meßstrecke angeordnetem Ventilator (9) eine zugleich als Absorptions- und Umlenkschalldämpfer wirkende Umlenkbeschaufelung eingebaut. Der Ventilator (9) ist ein Axialventilator, dessen Antriebsmotor in der Ventilatornabe untergebracht ist. An diesen Ventilator schließt sich ein Kegeldiffusor (10) an. Hinter diesem Kegeldiffusor folgt eine Querschnittsverformung (11) von rundem auf rechteckigen Querschnitt, die zugleich auch Diffusoreigenschaften haben kann, also den Strömungsquerschnitt in Strömungsrichtung noch weiter vergrößert. Am Ende dieses Diffusors ist ein Kühler (12) eingebaut. Dieser Kühler ist erforderlich, um die mit dem Ventilator in den Windkanal eingebrachte Energie, die sich in Wärme umwandelt, wieder abzuführen. Dies ist wichtig, da durch die Akustik-Ausstattung des Windkanals, welche zugleich isolierend wirkt, die Wärmeabgabe nach außen noch mehr als bei üblichen Windkanälen erschwert wird. In der Querverbindung zwischen dem Strömungskanal des Ventilators und dem Strömungskanal mit Düse und Meßstrecke sind in ähnlicher Weise wie in dem Querschenkel der Strömungsführung zwischen Auffänger und Ventilator zugleich zur Strömungsumlenkung und -verteilung dienende kulissenartige Schalldämpferelemente eingebaut (13). Stromab hinter dieser die Strömung insgesamt um 180° umlenkenden Einrichtung (13) befindet sich ein Schutzsieb (14), dahinter ein Gleichrichter (15) und erforderlichenfalls noch ein oder mehrere Turbulenzsiebe (16). Die Düse, insgesamt mit dem Bezugszeichen (1) gekennzeichnet, besteht aus einem feststehenden Teil (1a) und einem um die vertikale Achse (17) schwenkbaren Teil (1b). Sowohl der feststehende als auch der schwenkbare Teil sind mit Einlaufrundungen (18) bzw. (19) ausgestattet. Im vorliegenden Fall weist die Düse einen ebenen horizontalen Boden (20) auf, der in der gleichen Horizontalebene liegt wie der Meßkammerboden (21), auf dem das Modell (3) positioniert ist. Die Düse selber ist von einer Vorkammer (22) umgeben. Wird nun das schwenkbare Düsenvorderteil (1b) gedreht, so kann innerhalb dieser Düsenvorkammer (22) das feststehende Teil (1a) umströmt werden. Außerdem ist dort, wo durch das Schwenken des Düsenvorderteils der Ausströmquerschnitt aus dem feststehenden Düsenteil (1a) freigegeben wird, eine Ausströmung in diese großzügig bemessene Düsenvorkammer (22) möglich. Dadurch wird ein Aufstau der Strömung in der Düse vermieden und die Geschwindigkeitsverteilung am Austritt der Schwenkdüse im Meßstrahl wird durch das Schwenken, wenn überhaupt, dann nur kaum merklich beeinflußt. Wenn diese Düsenvorkammer schallabsorbierend ausgekleidet wird, so wirkt sie in Verbindung mit der vorteilhafterweise ebenfalls schallabsorbierend bekleideten Düsenaußenwand noch zusätzlich wie ein Kammerschalldämpfer. Um eine Abdichtung der Düsenvorkammer gegenüber dem Meßraum zu erreichen, ist die Außenwand des schwenkbaren Düsenvorderteils (1b) bezogen auf die Schwenkachse (17) zylindrisch ausgeführt. Der entsprechende Teil der Außenwand ist durch das Zeichen (23) gekennzeichnet. Auf dieser zylindrischen Außenwand kann eine Dichtlippe aufliegen, welche den Spalt zwischen verschwenkbarem Düsenvorderteil und Düsenvorkammer auch bei Schwenkbetrieb zuverlässig dichtet. In ähnlicher Weise ist eine Dichtung für die Zylinderquerschnittsfläche (24) oben und gegebenenfalls auch unten am Düsenvorderteil vorgesehen. Wenn der Boden (25) des schwenkbaren Düsenvorderteils (1a) in vorteilhafter Weise ein Kreisausschnitt aus dem Meßraumboden ist, so wird die Abdichtung des Düsenbodens z. B. als Lippendichtung am Umfang dieses Kreisausschnitts oder unterhalb desselben angebracht. Der Antrieb der Schwenkdüse, in den Figuren nicht eingezeichnet, erfolgt mittels einer Hydraulik oder einer Kurbelschwinge und entspricht den gemäß dem Stand der Technik im Maschinenbau üblichen Antriebskonzepten.

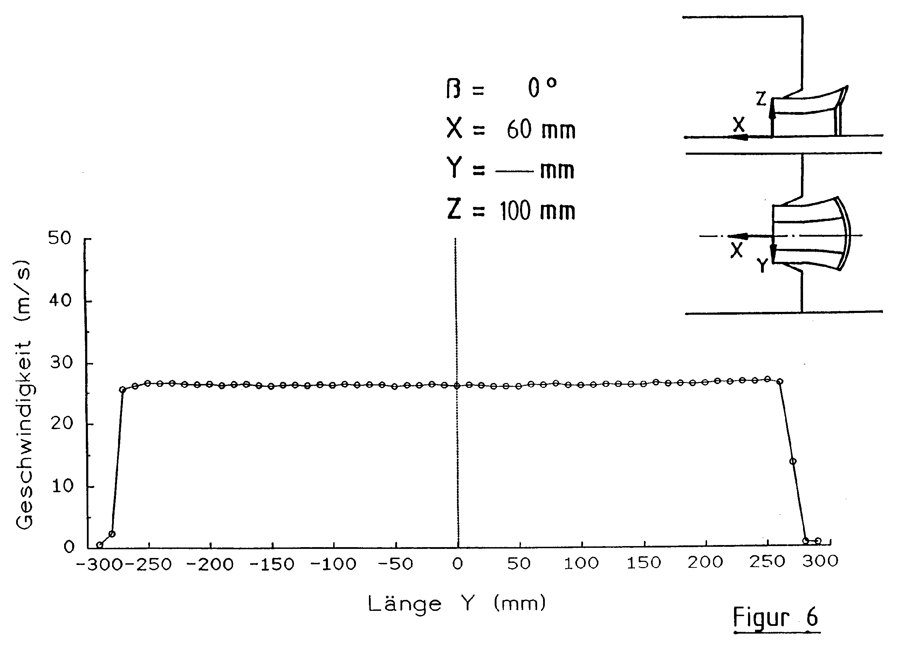

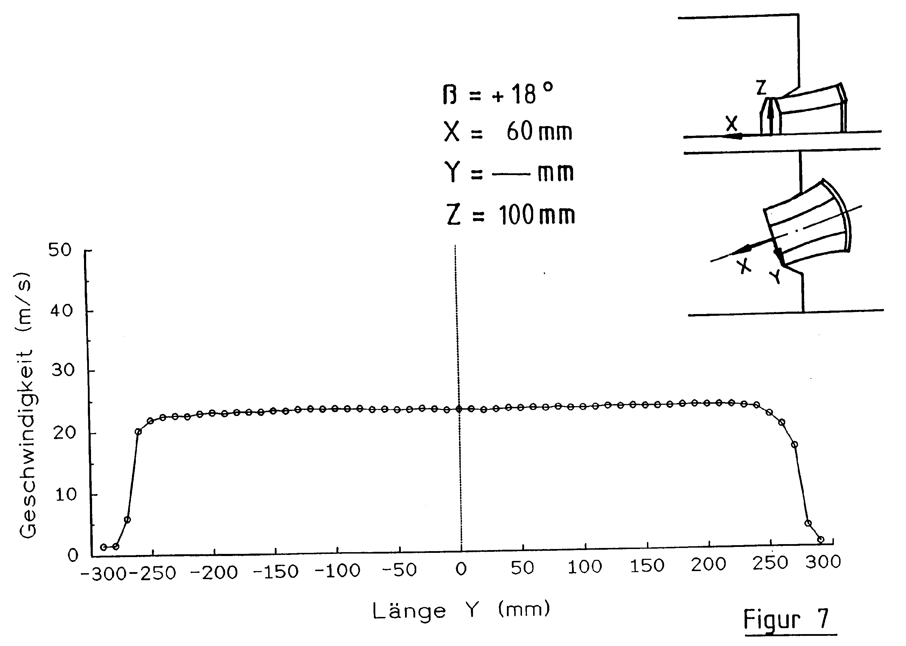

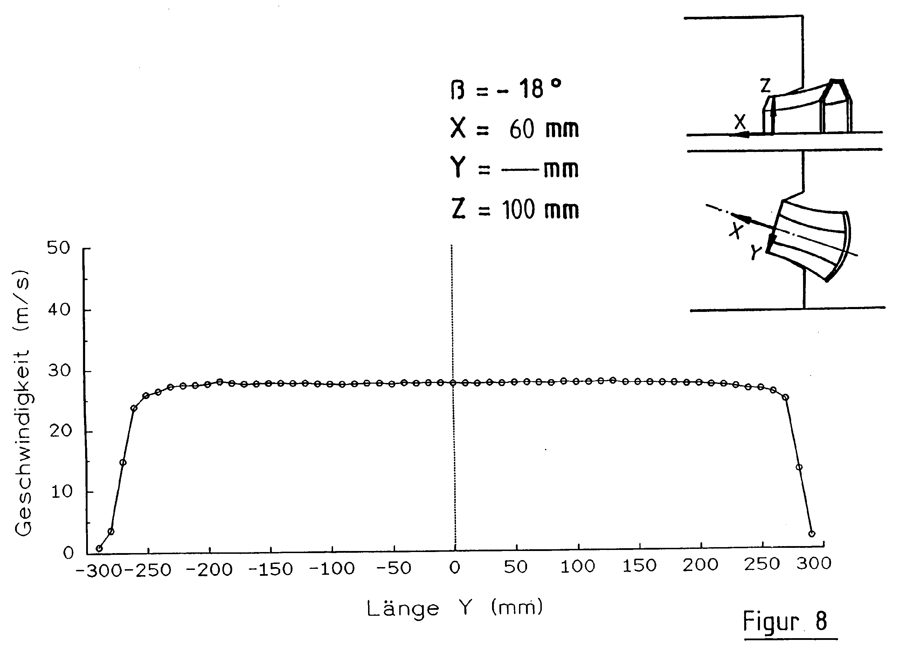

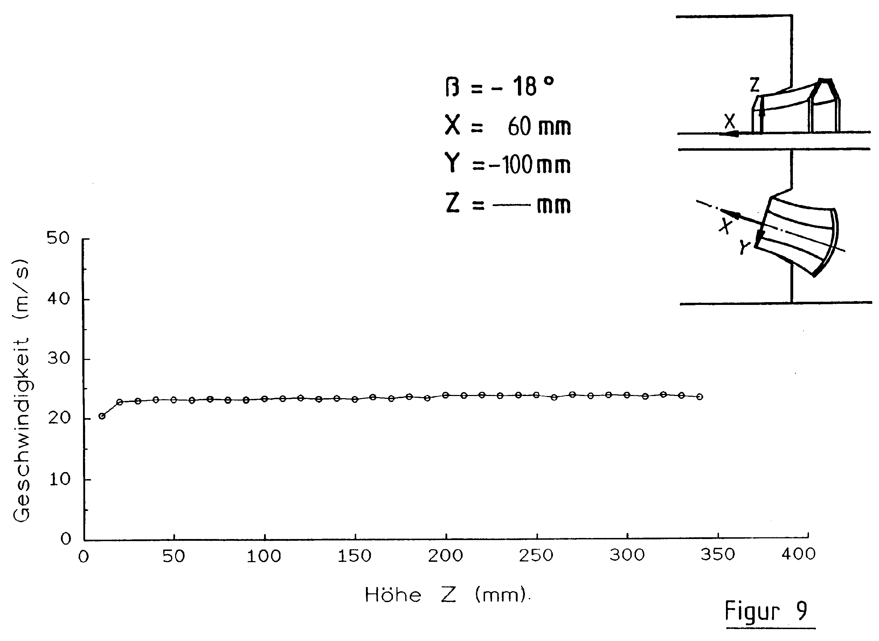

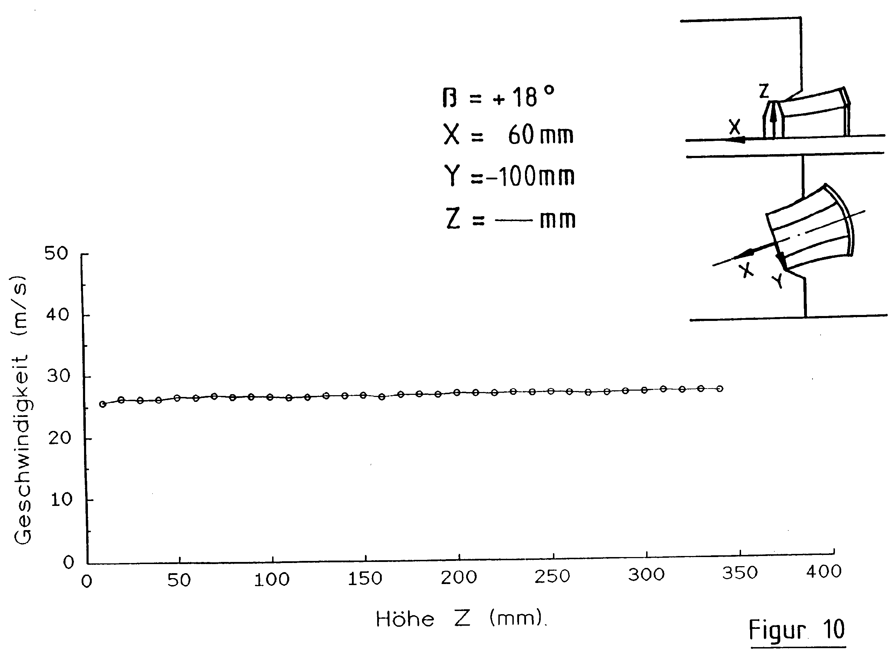

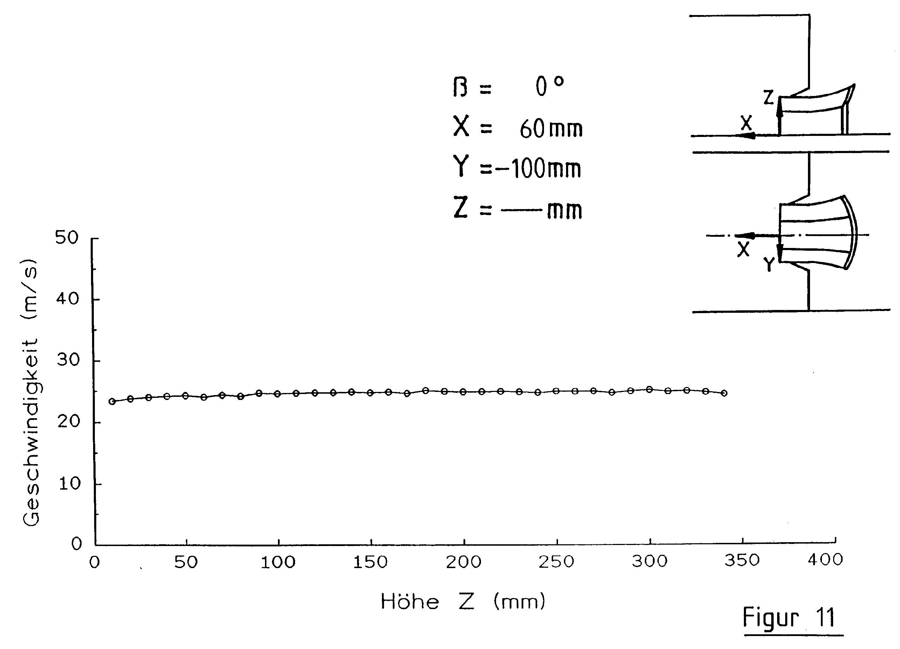

Ergebnisse, die an einem Modellwindkanal mit einer solchen Schwenkdüse gemessen wurden, sind in Form von Geschwindigkeitsverteilungen in den Figuren 6 bis 10 dargestellt. Figur 6 zeigt ein Geschwindigkeisprofil, 60 mm stromab von der Windkanaldüse in einer Höhe von 100 mm über dem Meßstreckenboden. Diese Maße gelten als Beispiel für ein Modell etwa im Maßstab 1:5 bis 1:8, bezogen auf den Windkanal in Großausführung, der die Untersuchung eines Personenkraftwagens in Originalgröße gestattet. Man erkennt, daß die Geschwindigkeitsverteilung sehr gleichmäßig ist. Die Figur 7 zeigt für Schwenkwinkel β = + 18° und die Figur 8 für Schwenkwinkel β = - 18° ebenfalls nahezu genauso gleichmäßige Geschwindigkeitsverteilungen wie für β = 0°. In der Figur 9 ist das vertikale Geschwindigkeitsprofil entlang der Höhenkoordinate Z aufgetragen und zwar wiederum für Schwenkwinkel 0°. Die Figuren 10 und 11 zeigen die entsprechenden Geschwindigkeitsprofile für die um + 18° bzw. - 18° verschwenkte Düse. Auch hier sind die Geschwindigkeitsverteilungen wieder sehr gleichmäßig und unterscheiden sich nicht merklich von der Geschwindigkeitsverteilung für die unverschwenkte Düse. Mit der Erfindung wird also die gestellte Aufgabe gelöst, einen Windkanal mit guter Strömungsqualität zu schaffen, bei dem während des Windkanalbetriebs, also bei Anströmung des im Windkanal befindlichen Objektes mit dem Windkanalstrahl, eine Veränderung der Strömungsrichtung möglich ist.

## Patentansprüche

1. Windkanal mit Freistrahlmeßstrecke (4) und zum Zweck der Änderung der Strömungsrichtung um eine vertikale Achse schwenkbarer Düsenanordnung (1) **dadurch gekennzeichnet**, daß die Strömungsrichtungsänderung durch Drehen eines Düsenvorderteiles (1b) erreich bar ist, dessen Austrittsquerschnitt völlig frei ist und keinerlei die Strömung störenden Einbauten aufweist und daß das Düsenvorderteil (1b) von dem stromauf befindlichen Düsenhinterteil (1a) im Bereich des Wendepunktes der Düsenkontur im Übergang von der - von der Düsenmittellinie aus betrachtet - konvexen Krümmung der Düsenwand zur konkaven Krümmung im vorderen Bereich der Düsee abgetrennt und das Düsenvorderteil an dieser Trennstelle von einer Einlaufrundung (19) umgeben ist.

2. Windkanal mit Freistrahlmeßstrecke nach Anspruch 1 dadurch gekennzeichnet, daß das schwenkbare Düsenvorderteil (1a) auf einen kreisförmigen Ausschnitt (25) der Bodenplatte montiert ist, dessen Mittelpunkt auf der vertikal verlaufenden Schwenkachse (17) liegt.

3. Windkanal mit Freistrahlmeßstrecke nach Anspruch 2 dadurch gekennzeichnet, daß das Düsenvorderteil (1b) zentrisch zur Schwenkachse (17) von einem Zylinder umgeben ist, dessen Mantelfläche (23) nach Art eines Küken das Düsenvorderteil bei der Schwenkbewegung gegen eine Kammer abdichtet, welche die Düse umgibt.

4. Windkanal mit Freistrahlmeßstrecke nach Anspruch 3 dadurch gekennzeichnet, daß die Düse von einer Kammer (22) umgeben ist, in welcher sich bei Schwenken der Düse eine Ausgleichsströmung einstellt.

5. Windkanal mit Freistrahlmeßstrecke nach Anspruch 4 dadurch gekennzeichnet, daß die Kammer (22), welche die Düsen umgibt, im Bereich des Eintritts in das Düsenhinterteil (1a) einen Rechteckquerschnitt hat und sich im Bereich des Düsenvorderteils der Düsenkontur durch einen seitlichen Einzug anpaßt.

6. Windkanal mit Freistrahlmeßstrecke nach einem der Ansprüche 1 bis 5 dadurch gekennzeichnet, daß die Winkelgeschwindigkeit der Schwenkbewegung in einem Bereich zwischen 30 Winkelgrad je Sekunde und 120 Winkelgrad je Sekunde liegt und der Schwenkwinkelbereich +/- 30°, vorzugsweise ca. +/- 20° umfaßt.

7. Windkanal mit Freistrahlmeßstrecke nach einem der Ansprüche 1 bis 6 dadurch gekennzeichnet, daß der Düsenquerschnitt oben gebrochene Ecken (26) aufweist und der oberen Hälfte eines Achteckquerschnittes entspricht, dessen horizontale Achse in die Bodenplatte fällt.

8. Windkanal mit Freistrahlmeßstrecke nach einem der Ansprüche 1 bis 7 dadurch gekennzeichnet, daß die Höhe des Zylinders (23) nach Anspruch 3 mindestens der Höhe der Düse entspricht und der Zylinder an seiner Oberseite mit einer horizontalen Dichtfläche (24) abschließt.

9. Windkanal mit Freistrahlmeßstrecke nach einem der Ansprüche 1 bis 8 dadurch gekennzeichnet, daß der Querschnitt der die Düse umgebenden Kammer zum Düseneintrittsquerschnitt in einem Verhältnis 12 bis 5 steht und die Düse selbst ein Verhältnis von Eintrittsquerschnitt zu Austrittsquerschnitt im Verhältnis 2 bis 6 aufweist.

10. Windkanal mit Freistrahlmeßstrecke nach einem der Ansprüche 1 bis 9 dadurch gekennzeichnet, daß das schwenkbare Düsenvorderteil ein Verhältnis von Eintrittsquerschnitt zu Austrittsquerschnitt im Verhältnis 1,5 bis 3 aufweist.

## Claims

1. Wind tunnel having a free jet test section (4) and a nozzle arrangement (1) which is rotatable about a vertical axis for the purpose of altering the direction of flow, characterized in that the change of direction of flow is achievable by rotation of a nozzle front part (1b), the exit cross-section of which is entirely free and exhibits no components disturbing the flow, and in that the nozzle front part (1b) is separated from the upstream nozzle rear part (1a) in the region of the turning point of the nozzle contour at the transition from the - viewed from the nozzle centre line - convex curvature of the nozzle wall to the concave curvature in the front region of the nozzle, and the nozzle front part is surrounded at this separation location by an inlet rounding (19).

2. Wind tunnel having a free jet test section according to Claim 1, characterized in that the rotatable nozzle front part (1a) is mounted on a circular section (25) of the floor plate, the centre of which section lies on the vertical extending axis of rotation (17).

3. Wind tunnel having a free jet test section according to Claim 2, characterized in that the nozzle front part (1b) is surrounded, concentrically with the axis of rotation (17), by a cylinder, the envelope surface (23) of which seals off the nozzle front part, in the manner of a plug, in the course of the rotary movement, in relation to a chamber which surrounds the nozzle.

4. Wind tunnel having a free jet test section according to Claim 3, characterized in that the nozzle is surrounded by a chamber (22), in which a compensating flow is established upon rotation of the nozzle.

5. Wind tunnel having a free jet test section according to Claim 4, characterized in that the chamber (22) which surrounds the nozzle has a rectangular cross-section in the region of the entry into the nozzle rear part (1a), and adapts in the region of the nozzle front part to the nozzle contour by a lateral indentation.

6. Wind tunnel having a free jet test section according to one of Claims 1 to 5, characterized in that the angular velocity of the rotary movement is within a range between 30 degrees of angle per second and 120 degress of angle per second and the rotational angle range comprises +/- 30°, preferably approximately +/- 20°.

7. Wind tunnel having a free jet test section according to one of Claims 1 to 6, characterized in that the nozzle cross-section exhibits at the top chamfered corners (26) and corresponds to the upper half of an octagonal cross-section, the horizontal axis of which falls within the floor plate.

8. Wind tunnel having a free jet test section according to one of Claims 1 to 7, characterized in that the height of the cylinder (23) according to Claim 3 corresponds at least to the height of the nozzle and the cylinder terminates at its top in a horizontal sealing surface (24).

9. Wind tunnel having a free jet test section according to one of Claims 1 to 8, characterized in that the cross-section of the chamber surrounding the nozzle is in a ratio of 12 to 5 to the nozzle entry cross-section and the nozzle itself exhibits a ratio of entry cross-section to exit cross-section in the ratio 2 to 6.

10. Wind tunnel having a free jet test section according to one of Claims 1 to 9, characterized in that the rotatable nozzle front part exhibits a ratio of entry cross-section to exit cross-section in the ratio 1.5 to 3.

## Revendications

1. Soufflerie avec veine d'essai à jet libre (4) et dispositif de buse susceptible de pivoter autour d'un axe vertical afin de modifier la direction d'écoulement, caractérisée en ce que la modification de la direction d'écoulement peut être obtenue par rotation d'une partie avant de buse (1b) dont la section transversale de sortie est totalement dégagée et qui ne présente aucune sorte d'éléments de garnissage intérieurs perturbant l'écoulement, et en ce que la partie avant de buse (1b) est séparée de la partie arrière de buse (1a), se trouvant en amont, dans la zone du point d'inflexion du contour de buse, à la transition - en observant depuis l'axe de buse - entre la courbure convexe de la paroi de buse et la courbure concave, dans la zone avant de la buse, et la partie avant de buse est entourée à ce point de séparation par un arrondi d'admission (19).

2. Soufflerie avec veine d'essai à jet libre selon la revendication 1, caractérisée en ce que la partie avant de buse (1a) pouvant pivoter est montée sur une découpure (25) de forme circulaire de la plaque de fond, dont le centre est situé sur l'axe de pivotement (17) s'étendant verticalement.

3. Soufflerie avec veine d'essai à jet libre selon la revendication 2, caractérisée en ce que la partie avant de buse (1b) est entourée, de façon centrée par rapport à l'axe de pivotement (17), par un cylindre dont la surface d'enveloppe (23) assure lors du mouvement de pivotement une étanchéification, à la façon d'un boisseau, de la partie avant de buse par rapport à une chambre entourant la buse.

4. Soufflerie avec veine d'essai à jet libre selon la revendication 3, caractérisée en ce que la buse est entourée par une chambre (22) dans laquelle est réglé un écoulement compensateur lors du pivotement de la buse.

5. Soufflerie avec veine d'essai à jet libre selon la revendication 4, caractérisée en ce que la chambre (22) qui entoure les buses a, dans la zone de l'entrée dans la partie arrière de buse (1a), une section transversale rectangulaire et s'adapte dans la zone de la partie avant de buse au contour de buse, par un rétrécissement latéral.

6. Soufflerie avec veine d'essai à jet libre selon l'une des revendications 1 à 5, caractérisée en ce que la vitesse angulaire du mouvement de pivotement est située dans une plage allant de 30 degrés angulaires par seconde à 120 degrés angulaires par seconde et la plage d'angle de pivotement est de ± 30°, de préférence d'à peu près ± 20°.

7. Soufflerie avec veine d'essai à jet libre selon l'une des revendications 1 à 6, caractérisée en ce que la section transversale de buse présente des angles (26) cassés en partie haute et correspond à la moitié supérieure d'une section transversale d'octogone, dont l'axe horizontal passe dans la plaque de fond.

8. Soufflerie avec veine d'essai à jet libre selon l'une des revendications 1 à 7, caractérisée en ce que la hauteur du cylindre (23) selon la revendication 3 correspond au moins à la hauteur de la buse et le cylindre est délimité sur sa face supérieure par une surface d'étanchéité (24) horizontale.

9. Soufflerie avec veine d'essai à jet libre selon l'une des revendications 1 à 8, caractérisée en ce que le rapport entre l'aire de la section transversale de la chambre entourant la buse et l'aire de la section transversale d'entrée de buse est compris entre 12 et 5 et la buse elle-même présentant une section transversale d'entrée dont l'aire, par rapport à l'aire de la section transversale de sortie, est située dans un rapport de 2 à 6.

10. Soufflerie avec veine d'essai à jet libre selon l'une des revendications 1 à 9, caractérisée en ce que la partie avant pivotante de buse présente un rapport de 1,5 à 3 entre l'aire de la section transversale d'entrée et l'aire de la section transversale de sortie.
